# EUROPEAN PATENT APPLICATION

(11) **EP 4 057 125 A1**
(43) Date of publication of application: **14.09.2022**
(21) Application number: 22156428.9
(22) Date of filing: 11.02.2022
(51) Int. Cl.: G06F 3/14, G09G 3/00, G09G 3/20

(54) **DISPLAY DEVICE AND METHOD OF DRIVING THE SAME**

(30) Priority: 11.03.2021 KR 20210032175
(71) Applicant: Samsung Display Co., Ltd., Yongin-si, Gyeonggi-do 17113 (KR)
(72) Inventor: KIM, Heendol, Hwaseong-si (KR); GOH, Joon-Chul, Suwon-si (KR); YOU, Bonghyun, Seoul (KR); HONG, Seokha, Seoul (KR)
(74) Representative: Taor, Simon Edward William

(57) **Abstract**

A display device includes display panels, a data converter that renders input image data to convert the input image data corresponding to edge regions of the display panels adjacent to a boundary portion between the display panels into correction data, and a driving controller that receives the correction data and generates a control signal that drives the display panels based on the correction data. The data converter generates the correction data in which an image displayed in the edge region is shifted based on a difference between values of the input image data corresponding to the edge regions of the display panels adjacent to the boundary portion between the display panels adjacent to each other.

## Description

### BACKGROUND

### 1. Technical Field

The disclosure relates to a display device and a method of driving the same. More particularly, the disclosure relates to a display device and a method of driving the same, capable of compensating for luminance non-uniformity and image discontinuity occurring at a boundary between display panels included in the display device.

### 2. Description of the Related Art

Display devices have been manufactured in various types, including an organic light emitting diode (OLED) display, a liquid crystal display (LCD), and the like.

Recently, researches for enlarging a display device are being conducted. The enlarged display device may include display panels. For example, the display device may include a tiled display device in which display panels are connected to each other so as to form a single display device.

According to the tiled display device, luminance non-uniformity and image discontinuity may occur at a boundary portion between the display panels because of a process of attaching the display panels to each other. Display quality of the display device may deteriorate because of a luminance difference and the image discontinuity.

### SUMMARY

An object of the disclosure is to provide a display device capable of compensating for a luminance difference and image discontinuity occurring at a boundary between display panels included in the display device to improve display quality of the display device.

Another object of the disclosure is to provide a method of driving the display device.

According to an aspect of embodiments, a display device may include display panels, a data converter that renders input image data to convert the input image data corresponding to edge regions of the display panels adjacent to a boundary portion between the display panels into correction data, and a driving controller that receives the correction data and generates a control signal that drives the display panels based on the correction data. The data converter may generate the correction data in which an image displayed in the edge region is shifted based on a difference between values of the input image data corresponding to the edge regions of the display panels adjacent to the boundary portion between the display panels adjacent to each other.

In embodiments, the data converter may measure whether the difference between the values of the input image data corresponding to the edge regions of the display panels adjacent to the boundary portion is equal to or greater than a preset threshold value and may convert the input image data into the correction data in case that the difference between the values of the input image data is equal to or greater than the threshold value.

In embodiments, in case that the values of the input image data corresponding to the edge regions of the display panels adjacent to the boundary portion are different from each other by n pixels, where n is a natural number, the data converter may generate the correction data in which the n pixels of the edge region are shifted.

In embodiments, in case that the values of the input image data corresponding to the edge regions of the display panels adjacent to the boundary portion are different from each other by n pixels, the data converter may generate the correction data in which the n pixels of the edge region are divided into m pixels, where m and n are natural numbers, which are greater than the n pixels, so as to be shifted in a gradation form.

In embodiments, in case that the values of the input image data corresponding to the edge regions of the display panels adjacent to the boundary portion are different from each other by n pixels, where n is a natural number, the data converter may render the input image data corresponding to the edge region by using a filter having a size of (2n+1)×(2n+1).

In embodiments, the display panels may include a first display panel, a second display panel, a third display panel, and a fourth display panel, the first to fourth display panels being arranged in two rows and two columns. The second display panel may be adjacent to the first display panel in a horizontal direction, the third display panel may be adjacent to the first display panel in a vertical direction, and the fourth display panel may be adjacent to the third display panel in the horizontal direction. The data converter may generate the correction data in which an image displayed in an edge region of the second display panel adjacent to the boundary portion, an image displayed in an edge region of the third display panel adjacent to the boundary portion, and an image displayed in an edge region of the fourth display panel adjacent to the boundary portion are shifted with respect to the first display panel.

In embodiments, the data converter may render the input image data corresponding to the edge region of the second display panel by using a filter having a size of 3 × 1.

In embodiments, the data converter may render the input image data corresponding to the edge region of the third display panel by using a filter having a size of 1×3.

In embodiments, the data converter may render the input image data corresponding to the edge region of the fourth display panel by using a filter having a size of 3×3.

In embodiments, the first and second display panels may have a scan direction that is different from a scan direction of the third and fourth display panels in the vertical direction.

In embodiments, the display panels may include pixels, the pixels including at least two sub-pixels. In a plan view of the display panels, the sub-pixels included in the pixels may be repeatedly arranged in the horizontal direction and the vertical direction.

According to another aspect of embodiments, a method of driving a display device may include measuring whether a difference between values of input image data corresponding to edge regions of display panels adjacent to a boundary portion between the display panels adjacent to each other is equal to or greater than a preset threshold value, generating correction data in which an image displayed in the edge region is shifted by rendering the input image data in case that the difference between the values of the input image data corresponding to the edge regions of the display panels adjacent to the boundary portion is equal to or greater than the threshold value, and receiving the correction data and generating a control signal that drives the display panels based on the correction data.

In embodiments, the generating of the correction data may include generating, in case that the values of the input image data corresponding to the edge regions of the display panels adjacent to the boundary portion are different from each other by n pixels, where n is a natural number, the correction data in which the n pixels of the edge region are shifted.

In embodiments, the generating of the correction data may include generating, in case that the values of the input image data corresponding to the edge regions of the display panels adjacent to the boundary portion are different from each other by n pixels, the correction data in which the n pixels of the edge region are divided into m pixels, where m and n are natural numbers, which are greater than the n pixels, so as to be shifted in a gradation form.

In embodiments, the display panels may include a first display panel, a second display panel, a third display panel, and a fourth display panel, which are arranged in two rows and two columns. The second display panel may be adjacent to the first display panel in a horizontal direction, the third display panel may be adjacent to the first display panel in a vertical direction, and the fourth display panel may be adjacent to the third display panel in the horizontal direction. The generating of the correction data may include generating the correction data in which an image displayed in an edge region of the second display panel adjacent to the boundary portion, an image displayed in an edge region of the third display panel adjacent to the boundary portion, and an image displayed in an edge region of the fourth display panel adjacent to the boundary portion are shifted with respect to the first display panel.

In embodiments, the generating of the correction data may include rendering the input image data corresponding to the edge region of the second display panel by using a filter having a size of 3×1.

In embodiments, the generating of the correction data may include rendering the input image data corresponding to the edge region of the third display panel by using a filter having a size of 1×3.

In embodiments, the generating of the correction data may include rendering the input image data corresponding to the edge region of the fourth display panel by using a filter having a size of 3×3.

In embodiments, the first and second display panels may have a scan direction that is different from a scan direction of the third and fourth display panels in the vertical direction.

In embodiments, the display panels may include pixels, the pixels including at least two sub-pixels. In a plan view of the display panels, the sub-pixels included in the pixels may be repeatedly arranged in the horizontal direction and the vertical direction.

According to an aspect, there is provided a display device as set out in claim 1. Additional features are set out in claims 2 to 11. According to an aspect, there is provided a method of driving a display device as set out in claim 12. Additional features are set out in claims 13 to 15. Therefore, a display device including display panels and a method of driving the same according to embodiments may generate correction data in which an image displayed in an edge region is shifted by rendering input image data at a boundary portion between the display panels and may generate a control signal for driving the display panels based on the correction data.

Thus, a luminance difference and image discontinuity occurring at the boundary portion between the display panels can be compensated for, and thus display quality of the display device including the display panels can be improved.

### BRIEF DESCRIPTION OF THE DRAWINGS

An additional appreciation according to the embodiments of the disclosure will become more apparent by describing in detail the embodiments thereof with reference to the accompanying drawings, wherein:
FIG. 1 is a block diagram schematically illustrating a display device according to embodiments.
FIG. 2 is a block diagram schematically illustrating an operation of a first display panel in FIG. 1.
FIG. 3 is a diagram schematically illustrating an example in which discontinuity occurs at a boundary portion between first to fourth display panels in FIG. 1.
FIGS. 4A to 4C are diagrams schematically illustrating a process of generating correction data by rendering input image data according to embodiments.
FIG. 5 is a diagram schematically illustrating another process of generating correction data by rendering input image data according to embodiments.
FIGS. 6A and 6B are diagrams schematically illustrating a scan direction of a display device according to embodiments.
FIG. 7 is a plan view schematically illustrating arrangements of sub-pixels included in display panels in FIG. 1.
FIG. 8 is a flowchart schematically illustrating an example of an operation of the display device of FIG. 1.

### DETAILED DESCRIPTION OF THE EMBODIMENTS

Hereinafter, embodiments of the disclosure will be explained in detail with reference to the accompanying drawings.

It will be understood that the terms "contact," "connected to," and "coupled to" may include a physical and/or electrical contact, connection, or coupling.

Unless otherwise defined or implied herein, all terms (including technical and scientific terms) used herein have the same meaning as commonly understood by those skilled in the art to which this disclosure pertains. It will be further understood that terms, such as those defined in commonly used dictionaries, should be interpreted as having a meaning that is consistent with their meaning in the context of the relevant art and the disclosure, and should not be interpreted in an ideal or excessively formal sense unless clearly so defined herein.

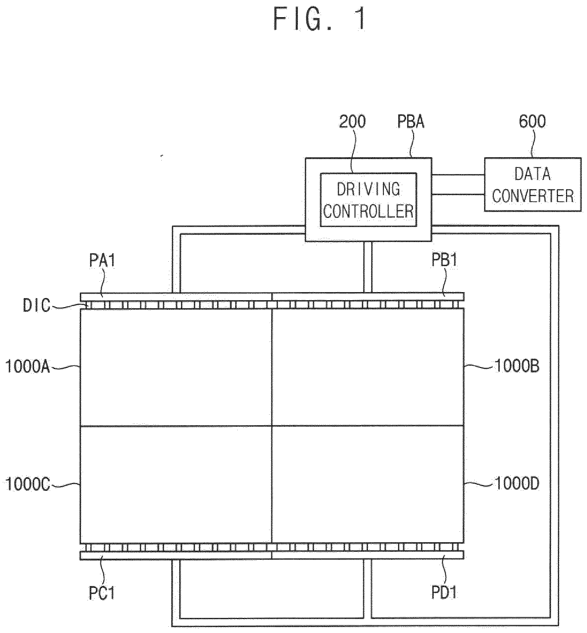

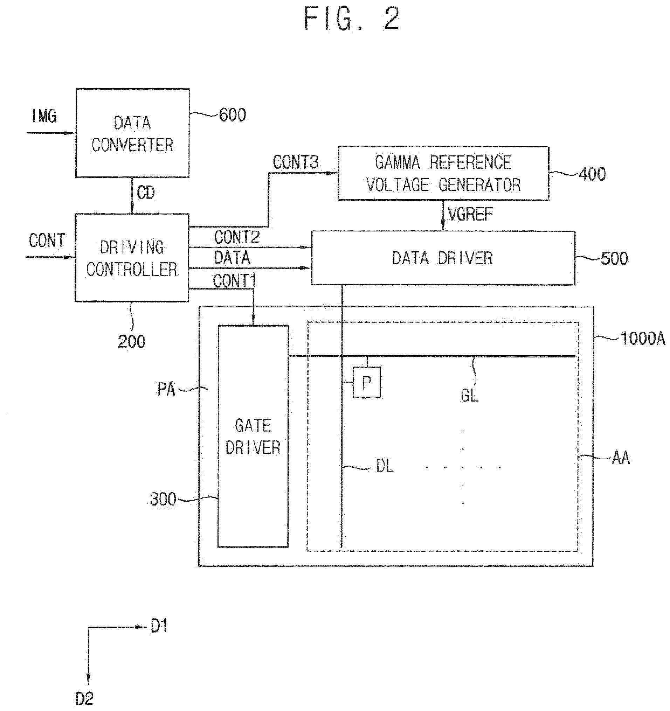

FIG. 1 is a block diagram schematically illustrating a display device according to embodiments, and FIG. 2 is a block diagram schematically illustrating an operation of a first display panel in FIG. 1.

Referring to FIGS. 1 and 2, a display device may include display panels 1000A, 1000B, 1000C, and 1000D connected to each other. According to the embodiment, the display device may include four display panels 1000A, 1000B, 1000C, and 1000D arranged in two rows and two columns. The four display panels 1000A, 1000B, 1000C, and 1000D may form a single large-sized television.

For example, the display panels may include a first display panel 1000A, a second display panel 1000B, a third display panel 1000C, and a fourth display panel 1000D arranged in two rows and two columns..

The second display panel 1000B may be adjacent to the first display panel 1000A in a first direction D1 (e.g., a horizontal direction), the third display panel 1000C may be adjacent to the first display panel 1000A in a second direction D2 (e.g., a vertical direction), and the fourth display panel 1000D may be adjacent to the third display panel 1000C in the first direction D1.

The display device may include a printed circuit board assembly PBA, a first printed circuit PA1, a second printed circuit PB1, a third printed circuit PC1, and a fourth printed circuit PD1.

The first printed circuit PA1 may be connected to the first display panel 1000A. The second printed circuit PB1 may be connected to the second display panel 1000B. The third printed circuit PC1 may be connected to the third display panel 1000C. The fourth printed circuit PD1 may be connected to the fourth display panel 1000D.

The printed circuit board assembly PBA may be connected to the first to fourth printed circuits PA1, PB1, PC1, and PD1. For example, a driving controller 200 may be disposed in the printed circuit board assembly PBA.

The display device may include flexible circuits connected to the first printed circuit PA1 and the first display panel 1000A. The display device may include flexible circuits connected to the second printed circuit PB1 and the second display panel 1000B. The display device may include flexible circuits connected to the third printed circuit PC1 and the third display panel 1000C. The display device may include flexible circuits connected to the fourth printed circuit PD1 and the fourth display panel 1000D.

Data driving chips DIC of a data driver 500 may be disposed in the flexible circuits. The data driving chip DIC may be an integrated circuit chip.

For example, the data driver 500 of the display device may include data driving chips DIC. Although each display device has been shown in FIG. 1 as including four data driving chips DIC, embodiments of the disclosure are not limited to such a number of the data driving chips DICs.

As shown in FIG. 1, for example, the display device may include four display panels 1000A, 1000B, 1000C, and 1000D, one driving controller 200, and one data converter 600.

Each of the display panels 1000A, 1000B, 1000C, and 1000D may include pixels P.

A driving operation of one display panel will be described with reference to the first display panel 1000A in FIG. 2. Each of driving operations of the second display panel 1000B, the third display panel 1000C, and the fourth display panel 1000D may be substantially the same as the driving operation of the first display panel 1000A.

The display device may include a display panel (e.g., 1000A) and a display panel driver. The display panel driver may include a driving controller 200, a gate driver 300, a gamma reference voltage generator 400, a data driver 500, and a data converter 600.

The display panel (e.g., 1000A) may include a display part AA for displaying an image, and a peripheral part PA adjacent to the display part AA.

The display panel (e.g., 1000A) may include gate lines GL, data lines DL, and pixels P electrically connected to the gate lines GL and the data lines DL, respectively. The gate lines GL may extend in the first direction D1, and the data lines DL may extend in the second direction D2 intersecting the first direction D1.

The driving controller 200 may receive an input control signal CONT from an external device (not shown). The driving controller 200 may generate a data signal DATA based on input image data IMG. For example, the input image data IMG may include red image data, green image data, and blue image data. The input image data IMG may include white image data. The input image data IMG may include magenta image data, yellow image data, and cyan image data. The input control signal CONT may include a master clock signal and a data enable signal. The input control signal CONT may further include a vertical synchronization signal and a horizontal synchronization signal.

The driving controller 200 may generate a first control signal CONT1, a second control signal CONT2, a third control signal CONT3, and a data signal DATA based on the input image data IMG and the input control signal CONT.

The driving controller 200 may generate the first control signal CONT1 for controlling an operation of the gate driver 300 based on the input control signal CONT to output the generated first control signal CONT1 to the gate driver 300. The first control signal CONT1 may include a vertical start signal and a gate clock signal.

The driving controller 200 may generate the second control signal CONT2 for controlling an operation of the data driver 500 based on the input control signal CONT to output the generated second control signal CONT2 to the data driver 500. The second control signal CONT2 may include a horizontal start signal and a load signal.

The driving controller 200 may generate the data signal DATA based on the input image data IMG. The driving controller 200 may output the data signal DATA to the data driver 500.

The driving controller 200 may generate the third control signal CONT3 for controlling an operation of the gamma reference voltage generator 400 based on the input control signal CONT to output the generated third control signal CONT3 to the gamma reference voltage generator 400.

The gate driver 300 may generate gate signals for driving the gate lines GL in response to the first control signal CONT1 received from the driving controller 200. The gate driver 300 may output the gate signals to the gate lines GL. For example, the gate driver 300 may sequentially output the gate signals to the gate lines GL.

According to the embodiment, the gate driver 300 may be integrated on the peripheral part PA of the display panel (e.g., 1000A). As another example, similar to the data driver 500, the gate driver 300 may be disposed outside the display panel (e.g., 1000A) while being adjacent to a first side of the display panel (e.g., 1000A).

The gamma reference voltage generator 400 may generate a gamma reference voltage VGREF in response to the third control signal CONT3 received from the driving controller 200. The gamma reference voltage generator 400 may provide the gamma reference voltage VGREF to the data driver 500. The gamma reference voltage VGREF may have a value corresponding to each data signal DATA.

In an embodiment, the gamma reference voltage generator 400 may be disposed in the driving controller 200 or the data driver 500.

The data driver 500 may receive the second control signal CONT2 and the data signal DATA from the driving controller 200, and receive the gamma reference voltage VGREF from the gamma reference voltage generator 400. The data driver 500 may convert the data signal DATA into an analog data voltage by using the gamma reference voltage VGREF. The data driver 500 may output the data voltage to the data line DL.

The data converter 600 may convert the input image data corresponding to edge regions of the display panels adjacent to a boundary portion of the display panel (e.g., 1000A) into correction data CD by rendering the input image data. For example, the data converter 600 may receive the input image data, and measure and/or determine whether a difference between values of the input image data corresponding to the edge regions of the display panels adjacent to a boundary portion between the display panels adjacent to each other is equal to or greater than a preset threshold error (or preset threshold value). The data converter 600 may convert the input image data into the correction data CD in case that the difference between the values of the input image data is equal to or greater than the threshold error. For example, the data converter 600 may generate the correction data CD in which an image displayed in the edge region is shifted. The data converter 600 may provide the correction data CD to the driving controller 200.

In an embodiment, the data converter 600 may be disposed in the driving controller 200, or may be independently disposed outside the driving controller 200.

The driving controller 200 may generate the data signal DATA based on the correction data CD corresponding to the edge regions of the display panels adjacent to the boundary portion of the display panel (e.g., 1000A). The data driver 500 may convert the data signal DATA generated based on the correction data CD corresponding to the edge regions of the display panels adjacent to the boundary portion of the display panel (e.g., 1000A) into the data voltage.

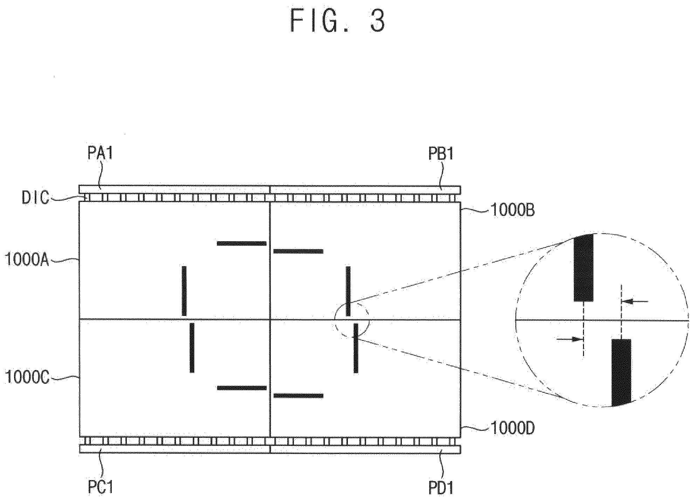

FIG. 3 is a diagram schematically illustrating an example in which discontinuity occurs at a boundary portion between first to fourth display panels in FIG. 1.

Referring to FIG. 3, the display device may include display panels 1000A, 1000B, 1000C, and 1000D connected to each other. According to the embodiment, the display panels may include a first display panel 1000A, a second display panel 1000B, a third display panel 1000C, and a fourth display panel 1000D arranged in two rows and two columns. For example, the second display panel 1000B may be adjacent to the first display panel 1000A in the first direction D1 (e.g., the horizontal direction), the third display panel 1000C may be adjacent to the first display panel 1000A in the second direction D2 (e.g., the vertical direction), and the fourth display panel 1000D may be adjacent to the third display panel 1000C in the first direction D1.

In case that display panels are connected to each other to display a single image, luminance non-uniformity and image discontinuity may occur at a boundary portion between the display panels because of a process of attaching the display panels to each other. For example, as shown in FIG. 3, an image displayed between the second display panel 1000B and the fourth display panel 1000D may have luminance non-uniformity or image discontinuity. Display quality of the display device may deteriorate because of the luminance non-uniformity and the image discontinuity. In order to prevent the luminance non-uniformity and the image discontinuity, according to the disclosure, the display device may shift the image displayed in the edge region based on the difference between the values of the input image data corresponding to the edge regions of the display panels adjacent to the boundary portion between the display panels adjacent to each other.

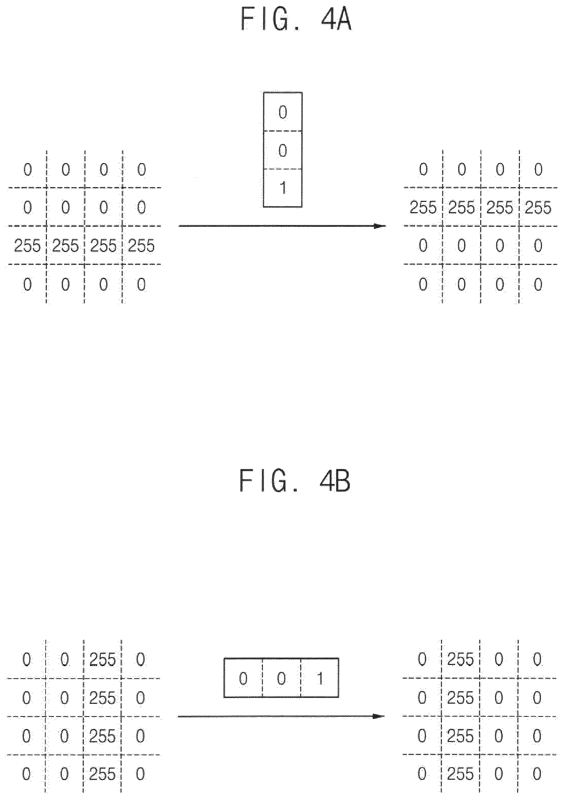

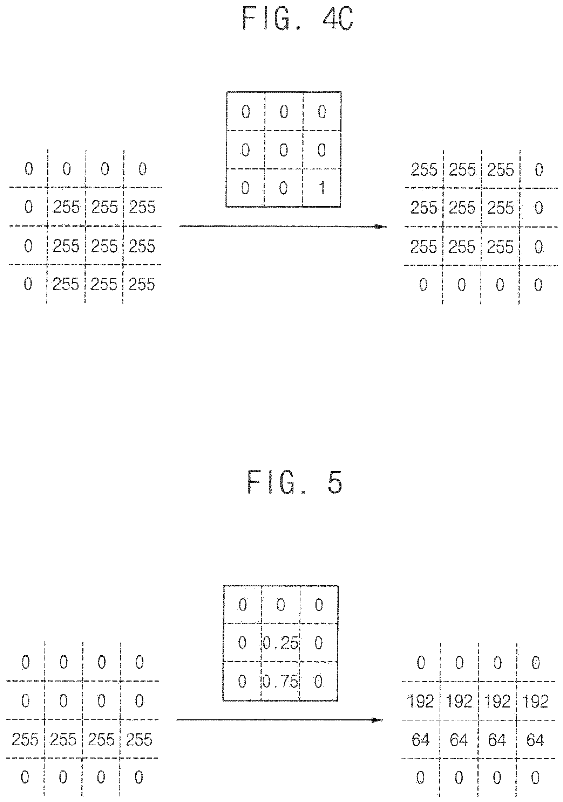

FIGS. 4A to 4C are diagrams schematically illustrating a process of generating correction data by rendering input image data according to embodiments, and FIG. 5 is a diagram schematically illustrating another process of generating correction data by rendering input image data according to embodiments.

Referring to FIGS. 1 to 5, the data converter 600 may receive the input image data, and may convert the input image data corresponding to the edge regions of the display panels adjacent to the boundary portion between the display panels into the correction data CD by rendering the input image data. In detail, the data converter 600 may measure whether the difference between the values of the input image data corresponding to the edge regions of the display panels adjacent to the boundary portion between the display panels adjacent to each other is equal to or greater than the preset threshold error. The data converter 600 may convert the input image data into the correction data CD in case that the difference between the values of the input image data is equal to or greater than the threshold error. For example, the data converter 600 may generate the correction data CD in which the image displayed in the edge region is shifted by rendering the input image data.

In case that the input image data is converted into the correction data CD, a specific filter may be used in a rendering process. To this end, the data converter 600 may include a separate memory (not shown). The memory may store a lookup table including a size and a coefficient of the filter. In other words, the size and the coefficient of the filter may be variously changed. The filter used for the rendering according to the disclosure may be independently applied to each sub-pixel included in the pixel. For example, each of the display panels may include pixels. Each of the pixels may include at least two sub-pixels. The input image data may include at least two sub-input image data corresponding to the sub-pixels, respectively. The data converter 600 may generate the correction data CD in which the sub-input image data is shifted by rendering the input image data in a unit of sub-pixels.

The data converter 600 may generate the correction data CD in which images displayed in an edge region of the second display panel 1000B adjacent to the boundary portion, an edge region of the third display panel 1000C adjacent to the boundary portion, and an edge region of the fourth display panel 1000D adjacent to the boundary portion are shifted with respect to the first display panel 1000A. For example, the data converter 600 may generate the correction data CD in which the image displayed in the edge region of the second display panel 1000B adjacent to the boundary portion is shifted in the vertical direction with respect to the first display panel 1000A. Because of the correction data CD, the image displayed in the edge region of the second display panel 1000B may have continuity with the first display panel 1000A in the vertical direction. For example, the data converter 600 may generate the correction data CD in which the image displayed in the edge region of the third display panel 1000C adjacent to the boundary portion is shifted in the horizontal direction with respect to the first display panel 1000A. Because of the correction data CD, the image displayed in the edge region of the third display panel 1000C may have continuity with the first display panel 1000A in the horizontal direction. For example, the data converter 600 may generate the correction data CD in which the image displayed in the edge region of the fourth display panel 1000D adjacent to the boundary portion is shifted in a diagonal direction with respect to the first display panel 1000A. Because of the correction data CD, the image displayed in the edge region of the fourth display panel 1000D may have continuity with the first display panel 1000A in the vertical direction and the horizontal direction.

In case that the values of the input image data corresponding to the edge regions of the display panels adjacent to the boundary portion between the display panels adjacent to each other are different from each other by n pixels, the data converter 600 may generate the correction data CD in which the n pixels of the boundary portion are shifted, where n is a natural number. In detail, the data converter 600 may measure (and/or determine) whether the difference between the values of the input image data corresponding to the edge regions of the display panels adjacent to the boundary portion between the display panels adjacent to each other is equal to or greater than the preset threshold error. The data converter 600 may convert the input image data into the correction data CD in case that the difference between the values of the input image data is equal to or greater than the threshold error. In case that the difference between the values of the input image data is the n pixels at the boundary portion, the data converter 600 may generate the correction data CD in which the n pixels of the boundary portion are shifted by rendering the input image data. In this case, n may be a positive number. For example, in case that the values of the input image data are different from each other by one pixel in the vertical direction at the boundary portion, the data converter 600 may generate the correction data CD in which one pixel of the boundary portion is shifted in the vertical direction by rendering the input image data. In this case, in case that one pixel is shifted, each of the sub-pixels included in the pixel may be shifted.

In an embodiment, the data converter 600 may render the input image data corresponding to the edge region of the second display panel 1000B adjacent to the boundary portion by using a filter having a size of 3×1. The data converter 600 may generate the correction data CD in which the image displayed in the edge region of the second display panel 1000B adjacent to the boundary portion is shifted in the vertical direction with respect to the first display panel 1000A. As shown in FIG. 4A, in case that the pixels of the second display panel 1000B are shifted in the vertical direction, the data converter 600 may convert the input image data into the correction data CD in which the shifting is performed in the vertical direction by using the filter having the size of 3×1. FIG. 4A illustrates a case in which the data converter 600 shifts the image displayed in the edge region of the second display panel 1000B adjacent to the boundary portion by one pixel in a vertical upper direction.

In an embodiment, the data converter 600 may render the input image data corresponding to the edge region of the third display panel 1000C adjacent to the boundary portion by using a filter having a size of 1×3. The data converter 600 may generate the correction data CD in which the image displayed in the edge region of the third display panel 1000C adjacent to the boundary portion is shifted in the horizontal direction with respect to the first display panel 1000A. As shown in FIG. 4B, in case that the pixels of the third display panel 1000C are shifted in the horizontal direction, the data converter 600 may convert the input image data into the correction data CD in which the shifting is performed in the horizontal direction by using the filter having the size of 1×3. FIG. 4B illustrates a case in which the data converter 600 shifts the image displayed in the edge region of the third display panel 1000C adjacent to the boundary portion by one pixel in a horizontal left direction.

In an embodiment, the data converter 600 may render the input image data corresponding to the edge region of the fourth display panel 1000D adjacent to the boundary portion by using a filter having a size of 3×3. The data converter 600 may generate the correction data CD in which the image displayed in the edge region of the fourth display panel 1000D adjacent to the boundary portion is shifted in the diagonal direction with respect to the first display panel 1000A. As shown in FIG. 4C, in case that the pixels of the fourth display panel 1000D are shifted in the diagonal direction, the data converter 600 may convert the input image data into the correction data CD in which the shifting is performed in the diagonal direction by using the filter having the size of 3×3. FIG. 4C illustrates a case in which the data converter 600 shifts the image displayed in the edge region of the fourth display panel 1000D adjacent to the boundary portion by one pixel in the vertical upper direction and by one pixel in the horizontal left direction.

As described above, according to the disclosure, the display device may convert the input image data into the correction data CD by rendering the input image data at the boundary portion between the display panels so as to reduce the luminance non-uniformity and the image discontinuity occurring at the boundary portion between the display panels. As a result, according to the disclosure, the display quality of the display device may be improved.

In an embodiment, in case that the values of the input image data corresponding to the edge regions of the display panels adjacent to the boundary portion between the display panels adjacent to each other are different from each other by n pixels, the data converter 600 may generate the correction data CD in which the n pixels of the edge region are divided into m pixels, which are greater than the n pixels, so as to be shifted in a gradation form, where m and n are natural numbers. In other words, the data converter 600 may gradually shift the image displayed in the edge region based on the difference between the values of the input image data corresponding to the edge regions of the display panels adjacent to the boundary portion between the display panels. As shown in FIG. 5, in case that the values of the input image data are different from each other by one pixel in the vertical direction at the boundary portion, the data converter 600 may generate the correction data CD in which one pixel of the boundary portion is divided so as to be shifted in the gradation form. FIG. 5 illustrates a case in which the data converter 600 shifts the image displayed in the edge region of the display panel by 0.75 pixels in the vertical upward direction, and maintains the image displayed in the edge region of the display panel by 0.25 pixels. In case that the display image of the boundary portion is gradually shifted as described above, the luminance non-uniformity and the image discontinuity between the display panels caused by a variation of the display image may be reduced more effectively.

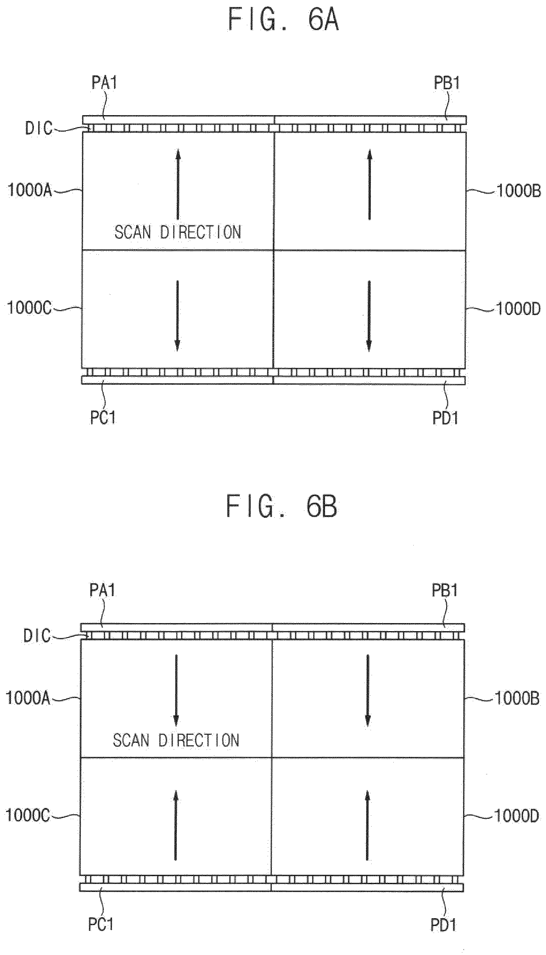

FIGS. 6A and 6B are diagrams schematically illustrating a scan direction of a display device according to embodiments.

Referring to FIGS. 1, 2, 6A, and 6B, the display panels adjacent to each other in the vertical direction may have mutually different scan directions in the vertical direction. In detail, the display device may include display panels 1000A, 1000B, 1000C, and 1000D connected to each other. According to the embodiment, the display panels may include a first display panel 1000A, a second display panel 1000B, a third display panel 1000C, and a fourth display panel 1000D arranged in two rows and two columns. In this case, the display panels adjacent to each other in the vertical direction may have scan directions opposite to each other in the vertical direction. For example, the first display panel 1000A and the third display panel 1000C may have scan directions opposite to each other. The second display panel 1000B and the fourth display panel 1000D may have scan directions opposite to each other. Therefore, the first and second display panels may have a scan direction that is different from a scan direction of the third and fourth display panels in the vertical direction.

In an embodiment, the display panels adjacent to each other in the vertical direction may have a scan direction from the boundary portion between the display panels to outer periphery edges of the display panels. As shown in FIG. 6A, the first display panel 1000A and the second display panel 1000B may have a vertical upper scan direction with respect to a horizontal boundary portion between the display panels. The third display panel 1000C and the fourth display panel 1000D may have a vertical downward scan direction with respect to the horizontal boundary portion between the display panels.

In another embodiment, the display panels adjacent to each other in the vertical direction may have a scan direction from the outer periphery edges of the display panels to the boundary portion between the display panels. As shown in FIG. 6B, the first display panel 1000A and the second display panel 1000B may have a vertical downward scan direction with respect to upper outer periphery edges of the display panels. The third display panel 1000C and the fourth display panel 1000D may have a vertical upper scan direction with respect to lower outer periphery edges of the display panels.

As described above, in case that the display panels adjacent to each other in the vertical direction have mutually different scan directions in the vertical direction, the display panels may receive scan signals at the same timing at the boundary portion. Therefore, according to the display device, the luminance non-uniformity and the image discontinuity caused by a scan time difference between the display panels at the boundary portion may be reduced.

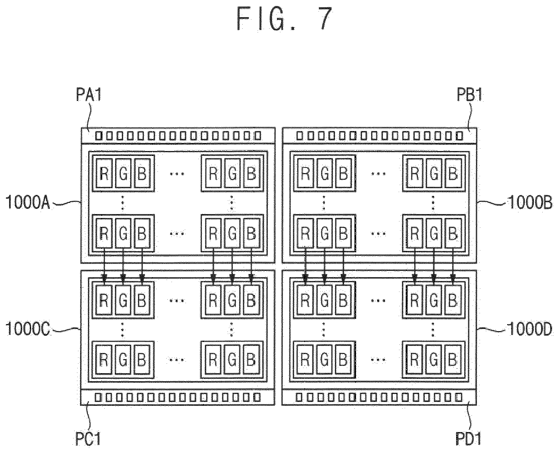

FIG. 7 is a plan view schematically illustrating arrangements of sub-pixels included in display panels in FIG. 1.

Referring to FIGS. 1, 2, and 7, each of the display panels may include pixels. Each of the pixels may include at least two sub-pixels. When viewed in a plan view of the display panels, the sub-pixels included in the pixels may be repeatedly arranged in the horizontal direction and the vertical direction. As shown in FIG. 7, arrangements of the sub-pixels of the pixels included in the first display panel 1000A, the second display panel 1000B, the third display panel 1000C, and the fourth display panel 1000D may be the same. In other words, even in case that the display device according to the disclosure is configured such that the third display panel 1000C is rotated with respect to the first display panel 1000A by 180 degrees, and the fourth display panel 1000D is rotated with respect to the second display panel 1000B by 180 degrees, the arrangements of the sub-pixels included in the pixels may not be changed. Accordingly, an arrangement of the pixels adjacent to a boundary between the first display panel 1000A and the third display panel 1000C and an arrangement of the pixels adjacent to a boundary between the second display panel 1000B and the fourth display panel 1000D may not be changed. Therefore, according to the display device, the luminance non-uniformity of the display image and the image discontinuity occurring at the boundary portion may be reduced.

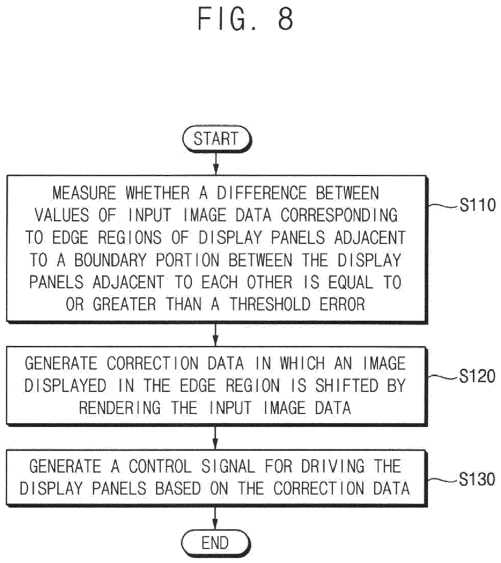

FIG. 8 is a flowchart schematically illustrating an example of an operation of the display device of FIG. 1.

Referring to FIG. 8, according to the disclosure, the display device may: measure (and/or determine) whether a difference between values of input image data corresponding to edge regions of display panels adjacent to a boundary portion between the display panels adjacent to each other is equal to or greater than a threshold error (S110), generate correction data CD in which an image displayed in the edge region is shifted by rendering the input image data (S120), and generate a control signal for driving the display panels based on the correction data CD (S130).

The display panels may include a first display panel 1000A, a second display panel 1000B, a third display panel 1000C, and a fourth display panel 1000D arranged in two rows and two columns. The difference between the values of the input image data may occur at the boundary portion between the display panels. Because of the difference between the values of the input image data, the display image of the boundary portion may be displayed discontinuously.

In an embodiment, the display device may measure (and/or determine) whether the difference between the values of input image data corresponding to the edge regions of the display panels adjacent to the boundary portion between the display panels adjacent to each other is equal to or greater than the threshold error (S110). In detail, the data converter 600 may receive the input image data. The data converter 600 may pre-store, in a form of a lookup table, the threshold error for the values of the input image data at which discontinuity of the display image is visually recognized at the boundary portion. The data converter 600 may measure whether the difference between the values of the input image data is equal to or greater than a preset threshold error by using the lookup table. In case that the difference between the values of the input image data is equal to or greater than the preset threshold error, the data converter 600 may convert the input image data into the correction data CD by rendering the input image data.

In an embodiment, the display device may generate the correction data CD in which the image displayed in the edge region is shifted by rendering the input image data (S120). In detail, the data converter 600 may generate the correction data CD in which images displayed in an edge region of the second display panel 1000B adjacent to the boundary portion, an edge region of the third display panel 1000C adjacent to the boundary portion, and an edge region of the fourth display panel 1000D adjacent to the boundary portion are shifted with respect to the first display panel 1000A. In case that the values of the input image data corresponding to the edge regions of the display panels adjacent to the boundary portion between the display panels adjacent to each other are different from each other by n pixels, the data converter 600 may generate the correction data CD in which the n pixels of the boundary portion are shifted. For example, in case that the values of the input image data are different from each other by one pixel in the vertical direction at the boundary portion, the data converter 600 may generate the correction data CD in which one pixel of the boundary portion is shifted in the vertical direction by rendering the input image data. In this case, in case that one pixel is shifted, each of sub-pixels included in the pixel may be shifted.

In case that the input image data is converted into the correction data CD, a specific filter may be used in a rendering process. To this end, the data converter 600 may include a memory (e.g., a separate memory, not shown). The memory may store a lookup table including a size and a coefficient of the filter. In other words, the size and the coefficient of the filter may be variously changed. For example, the data converter 600 may render the input image data corresponding to the edge region of the second display panel 1000B adjacent to the boundary portion by using a filter having a size of 3×1. The data converter 600 may generate the correction data CD in which the image displayed in the edge region of the second display panel 1000B adjacent to the boundary portion is shifted in the vertical direction with respect to the first display panel 1000A. As another example, the data converter 600 may render the input image data corresponding to the edge region of the third display panel 1000C adjacent to the boundary portion by using a filter having a size of 1×3. The data converter 600 may generate the correction data CD in which the image displayed in the edge region of the third display panel 1000C adjacent to the boundary portion is shifted in the horizontal direction with respect to the first display panel 1000A. As still another example, the data converter 600 may render the input image data corresponding to the edge region of the fourth display panel 1000D adjacent to the boundary portion by using a filter having a size of 3×3. The data converter 600 may generate the correction data CD in which the image displayed in the edge region of the fourth display panel 1000D adjacent to the boundary portion is shifted in the diagonal direction with respect to the first display panel 1000A.

Meanwhile, in case that the values of the input image data corresponding to the edge regions of the display panels adjacent to the boundary portion between the display panels adjacent to each other are different from each other by n pixels, the data converter 600 may generate the correction data CD in which the n pixels of the edge region are divided into m pixels, which are greater than the n pixels, so as to be shifted in a gradation form, where m and n are natural numbers. In other words, the data converter 600 may gradually shift the image displayed in the edge region based on the difference between the values of the input image data corresponding to the edge regions of the display panels adjacent to the boundary portion between the display panels.

In an embodiment, the display device may generate a control signal for driving the display panels based on the correction data CD (S130). In detail, the driving controller 200 may receive the correction data CD from the data converter 600. The driving controller 200 may generate a first control signal CONT1, a second control signal CONT2, a third control signal CONT3, and a data signal DATA based on the correction data CD and an input control signal CONT. The display panels may display a single display image according to the control signals.

As discussed, embodiments can provide a display device comprising: two adjacent display panels; a data converter arranged to render input image data to convert the input image data corresponding to edge regions of the two adjacent display panels into correction data, each edge region being adjacent to a boundary portion between the two adjacent display panels; and a driving controller arranged to receive the correction data and to generate a control signal that drives the two adjacent display panels based on the correction data, wherein the data converter is arranged to generate the correction data so that an image displayed in the edge region of one of the two adjacent display panels is shifted based on a difference between values of the input image data corresponding to the edge regions of the two adjacent display panels.

In some embodiments, the one of the two adjacent display panels may be driven based on the correction data, and the other of the two adjacent display panels may be driven based on the input image data for that panel.

Embodiments can provide a method of driving a display device comprising two adjacent display panels, the method comprising: measuring whether a difference between values of input image data corresponding to edge regions of the two adjacent display panels display panels is equal to or greater than a preset threshold value, each edge region being adjacent to a boundary portion between the two adjacent display panels; generating correction data in which an image displayed in the edge region of one of the two adjacent display panels is shifted by rendering the input image data in case that the difference between the values of the input image data corresponding to the edge regions of the two adjacent display panels is equal to or greater than the threshold value; and receiving the correction data and generating a control signal that drives the display panels based on the correction data.

As discussed, embodiments of the invention may determine an offset based on comparison of pixel values (e.g. brightness) or sub-pixel values (e.g. brightness). Embodiments of the invention may then apply this offset to one of the adjacent display panels.

As described above, according to the disclosure, the display device may convert the input image data into the correction data CD by rendering the input image data at the boundary portion between the display panels so as to reduce the luminance non-uniformity and the image discontinuity occurring at the boundary portion between the display panels. As a result, according to the disclosure, the display quality of the display device may be improved.

The disclosure may be applied to a display device and an electronic device including the display device. For example, the disclosure may be applied to an extra-large digital television, an extra-large 3D television, an extra-large advertising display device, etc.

The foregoing is illustrative of embodiments and is not to be construed as limiting thereof. Although a few embodiments have been described, those skilled in the art will readily appreciate that many modifications are possible in the embodiments without materially departing from the novel teachings and advantages of the disclosure. Accordingly, all such modifications are intended to be included within the scope of the disclosure. Therefore, it is to be understood that the foregoing is illustrative of various embodiments and is not to be construed as being limited to the specific embodiments disclosed, and that modifications to the disclosed embodiments, as well as other embodiments, are intended to be included within the scope of the appended claims.

## Claims

1. A display device comprising:
two adjacent display panels;
a data converter arranged to render input image data to convert the input image data corresponding to edge regions of the two adjacent display panels into correction data, each edge region being adjacent to a boundary portion between the two adjacent display panels; and
a driving controller arranged to receive the correction data and to generate a control signal that drives the two adjacent display panels based on the correction data,
wherein the data converter is arranged to generate the correction data so that an image displayed in the edge region of one of the two adjacent display panels is shifted based on a difference between values of the input image data corresponding to the edge regions of the two adjacent display panels.

2. The display device of claim 1, wherein the data converter is arranged to measure whether the difference between the values of the input image data corresponding to the edge regions of the two adjacent display panels is equal to or greater than a preset threshold value, and to convert the input image data into the correction data in case that the difference between the values of the input image data is equal to or greater than the threshold value.

3. The display device of claim 2, wherein in case that the values of the input image data corresponding to the edge regions of the two adjacent display panels are different from each other by n pixels, where n is a natural number, the data converter is arranged to generate the correction data in which the n pixels of the edge region are shifted.

4. The display device of claim 2 or 3, wherein in case that the values of the input image data corresponding to the edge regions of the two adjacent display panels are different from each other by n pixels, the data converter is arranged to generate the correction data in which the n pixels of the edge region are divided into m pixels, which are greater than the n pixels, where m and n are natural numbers, so as to be shifted in a gradation form.

5. The display device of any one of claims 2 to 4, wherein in case that the values of the input image data corresponding to the edge regions of the two adjacent display panels are different from each other by n pixels, where n is a natural number, the data converter is arranged to render the input image data corresponding to the edge region by using a filter having a size of (2n+1)×(2n+1).

6. The display device of any one of claims 2 to 5, wherein
the display panels include:
a first display panel;
a second display panel;
a third display panel; and
a fourth display panel, the first to fourth display panels being arranged in two rows and two columns,
the second display panel is adjacent to the first display panel in a horizontal direction, the third display panel is adjacent to the first display panel in a vertical direction, and the fourth display panel is adjacent to the third display panel in the horizontal direction, and
the data converter is arranged to generate the correction data in which an image displayed in an edge region of the second display panel adjacent to the boundary portion, an image displayed in an edge region of the third display panel adjacent to the boundary portion, and an image displayed in an edge region of the fourth display panel adjacent to the boundary portion are shifted with respect to the first display panel.

7. The display device of claim 6, wherein the data converter is arranged to render the input image data corresponding to the edge region of the second display panel by using a filter having a size of 3×1; and/or
wherein the data converter is arranged to render the input image data corresponding to the edge region of the third display panel by using a filter having a size of 1×3; and/or
wherein the data converter is arranged to render the input image data corresponding to the edge region of the fourth display panel by using a filter having a size of 3×3.

8. The display device of claim 6 or 7, wherein the first and second display panels have a scan direction that is different from a scan direction of the third and fourth display panels in the vertical direction.

9. The display device of any one of claims 6 to 8, wherein
the display panels include pixels, the pixels including at least two sub-pixels, and
in a plan view of the display panels, the sub-pixels included in the pixels are repeatedly arranged in the horizontal direction and the vertical direction.

10. A method of driving a display device comprising two adjacent display panels, the method comprising:
measuring whether a difference between values of input image data corresponding to edge regions of the two adjacent display panels display panels is equal to or greater than a preset threshold value, each edge region being adjacent to a boundary portion between the two adjacent display panels;
generating correction data in which an image displayed in the edge region of one of the two adjacent display panels is shifted by rendering the input image data in case that the difference between the values of the input image data corresponding to the edge regions of the two adjacent display panels is equal to or greater than the threshold value; and
receiving the correction data and generating a control signal that drives the display panels based on the correction data.

11. The method of claim 10, wherein the generating of the correction data includes generating, in case that the values of the input image data corresponding to the edge regions of the two adjacent display panels are different from each other by n pixels, where n is a natural number, the correction data in which the n pixels of the edge region are shifted; or
wherein the generating of the correction data includes generating, in case that the values of the input image data corresponding to the edge regions of the two adjacent display panels are different from each other by n pixels, the correction data in which the n pixels of the edge region are divided into m pixels, which are greater than the n pixels, where m and n are natural numbers, so as to be shifted in a gradation form.

12. The method of claim 10 or 11, wherein
the display panels include a first display panel, a second display panel, a third display panel, and a fourth display panel, which are arranged in two rows and two columns,
the second display panel is adjacent to the first display panel in a horizontal direction, the third display panel is adjacent to the first display panel in a vertical direction, and the fourth display panel is adjacent to the third display panel in the horizontal direction, and
the generating of the correction data includes generating the correction data in which an image displayed in an edge region of the second display panel adjacent to the boundary portion, an image displayed in an edge region of the third display panel adjacent to the boundary portion, and an image displayed in an edge region of the fourth display panel adjacent to the boundary portion are shifted with respect to the first display panel.

13. The method of claim 12, wherein the generating of the correction data includes rendering the input image data corresponding to the edge region of the second display panel by using a filter having a size of 3×1; and/or
wherein the generating of the correction data includes rendering the input image data corresponding to the edge region of the third display panel by using a filter having a size of 1×3; and/or
wherein the generating of the correction data includes rendering the input image data corresponding to the edge region of the fourth display panel by using a filter having a size of 3×3.

14. The method of claim 12 or 13, wherein the first and second display panels have a scan direction that is different from a scan direction of the third and fourth display panels in the vertical direction.

15. The method of any one of claims 12 to 14, wherein
the display panels include pixels, the pixels including at least two sub-pixels, and
in a plan view of the display panels, the sub-pixels included in the pixels are repeatedly arranged in the horizontal direction and the vertical direction.
